# EUROPEAN PATENT SPECIFICATION

(11) **EP 1 633 548 B1**
(45) Date of publication and mention of the grant of the patent: **14.11.2007**
(21) Application number: 04739983.7
(22) Date of filing: 17.06.2004
(51) Int. Cl.: B29C 49/00, B29C 49/46

(54) **APPARATUS FOR THERMOFORMING CONTAINERS WITH GUIDED STERILE FLUID FLOW AROUND THE WORKSTATIONS**
VORRICHTUNG ZUM THERMOFORMEN VON BEHÄLTERN MIT EINEM GEFÜHRTEN STROM VON STERILEM FLUID UM DIE ARBEITSSTATIONEN HERUM
APPAREIL DE THERMOFORMAGE DE RECIPIENTS AVEC UN COURANT DE FLUID STERILE DIRIGE AUTOUR DES STATIONS DE TRAVAIL

(30) Priority: 19.06.2003 IT MO20030178
(43) Date of publication of application: 15.03.2006
(73) Proprietor: Sarong Societa'Per Azioni, 42046 Reggiolo (IT)
(72) Inventor: BARTOLI, Alberto, IT-42020 Quattro Castella (IT); BARTOLI, Andrea, I-42100 Reggio Emilia (IT); FINETTI, Primo, I-41037 Mirandola (IT)
(74) Representative: Crugnola, Pietro
(86) International application number: PCT/EP2004/006524
(87) International publication number: WO 2004/113052

(56) References cited:
- US-A- 3 712 784
- US-A- 3 930 779
- US-A- 5 813 197
- PATENT ABSTRACTS OF JAPAN vol. 0091, no. 83 (M-400), 30 July 1985 (1985-07-30) & JP 60 049919 A (AIDA ENGINEERING KK), 19 March 1985 (1985-03-19)

## Description

This invention relates to an apparatus for thermoforming containers in a sterile environment. Apparati like that are disclosed in JP 360 049 919 or US 5 813 197 respectively.

Apparatuses are known for the production of containers obtained by thermoforming by injecting a forming fluid, the apparatuses comprising a plurality of workstations through which is advanced a thermoformable sheet material unwound from a respective reel.

The workstations may comprise a welding station, in which the sheet material is welded in such a way that preforms of containers are defined therein. These preforms are delimited by a weld that extends along a major portion of the perimeter of the preforms and that is interrupted at a zone of this perimeter in which an opening is defined.

The workstations may also comprise a forming station in which the preforms are inserted into a mould and a forming fluid is introduced therein through the aforementioned openings.

There are also provided a sterile filling station, in which a product is introduced inside the formed containers, and a sealing station, in which the above disclosed openings are sealed in such a way as to enclose the product inside the containers.

Upstream of the sealing station a preheating station of the sheet material can be provided, in which the sheet material is prepared for subsequent welding and forming operations.

If the apparatuses have to operate in hygienically controlled conditions, as occurs for example in the packaging of food or pharmaceutical products, the stations that make up the apparatuses are enclosed inside a compartment isolated from the external environment and are subjected to sanitation operations.

Such sanitation operations provide for a reagent being spread over the surface of the stations before the start of a work session of the apparatuses.

This reagent produces a sanitising foam that removes powders and microorganisms, thereby generating a substantially aseptic environment within the compartment.

Subsequently, during operation of the apparatus, a flow of purified air is conveyed inside the compartment to maintain the sterility condition obtained by means of the detergent action of the sanitising foam.

One drawback of the apparatuses disclosed above consists of the fact that the flow, by interacting with the devices with which the workstations are provided, generates a plurality of vortices that may pick up contaminating particles and/or microorganisms present at points that are far from the workstations and make them to interact within the workstations with the sheet material, or with the formed containers, or with the filled but not still sealed containers, and with the contents of the latter.

As a result, until today there are no known apparatuses for thermoforming by injection of a forming fluid that operate in conditions of effective sterility.

Furthermore, the replacement of an empty reel with a new reel constitutes a source of contamination inasmuch as some zones of the apparatuses come into contact with the reel and/or with operators assigned to replacement.

In this case, the flow of sterile air must be stopped, and after fitting the reel, a new sanitation cycle must be provided by spraying with sanitising foam.

This involves considerable downtime and a considerable reduction in the productivity of the apparatuses.

The sheet material with which the containers are made may comprise a plurality of mutually coupled sheets, in case made of materials having different characteristics.

These sheets, before being joined together, are treated with sticking promoting substances that are provided with organoleptic properties that are such as to attract certain types of insect.

Some of these insects may thus remain permanently trapped between one sheet and the other.

As a result, when sheet material of the above type is used in a prior-art machine, it may give rise to containers containing an insect within one of their walls.

Such a container is obviously rather displeasing to a user, who associates the insect with the idea of poor hygiene.

The possibility that an insect is trapped between two sheets of the sheet material must be prevented with particular care if the sheet material has to be used to produce containers filled with a sterile product.

One object of the invention is to improve known thermoforming apparatuses, in particular by increasing their level of hygiene.

A still further object of the invention is to avoid the production of containers consisting of sheet material incorporating contaminating elements, in particular insects.

In a first aspect of the invention an apparatus is provided for thermoforming containers by injecting a forming fluid, comprising a plurality of workstations through which a sheet material to be thermoformed is advanced, producing means for producing a flow of sterile fluid arranged for sterilizing said workstations, characterised in that it further comprises diffusing means arranged for guiding the streamlines of said flow along preset trajectories.

Owing to this aspect of the invention it is possible to obtain a thermoforming apparatus that operates in conditions of complete sterility.

The diffusing means in fact enables the streamlines forming the flow of sterile air to lick the device - and the sheet material - current in the workstations, or to keep near the devices and the sheet material, without coming into contact with potential sources of contamination.

In one embodiment, the diffusing means is formed in such a way as to maintain the flow of sterile air as a substantially laminar flow.

In such a case the absence of vortices avoids that the air flow in a turbulent motion pick up contaminating particles and/or microorganisms from peripheral zones of the workstations and deposit them at work zones of the workstations, the work zones may comprise, for example, those in which the sheet material interacts with preheating, welding and forming moulds, or those in which nozzles of a filling device penetrate inside formed containers to fill them with a product to be packaged.

The invention may be better understood and implemented with reference to the attached drawings that show a non-limiting embodiment by way of example, in which:
Figure 1 is a schematic section taken along a longitudinal plane of an apparatus according to the invention;
Figure 2 is a section like the one in Figure 1 showing a version of the apparatus according to the invention;
Figure 3 is a schematic plan view of the apparatus in. Figure 2;
Figure 4 is a schematic section, taken along a traverse plane, of a forming station of an apparatus according to the invention showing diffusing means of the apparatus;
Figure 5 is a view like the one in Figure 4 showing a version of the diffusing means;
Figure 6 is a schematic plan view of a sealing station and of an inserting station of the apparatus in Figure 1, in which plug means is associated with formed and filled containers;
Figure 7 is a schematic side view of a seal-testing station, of a perforating station, of a monitoring station and of a severing station of the apparatus in Figure 1.

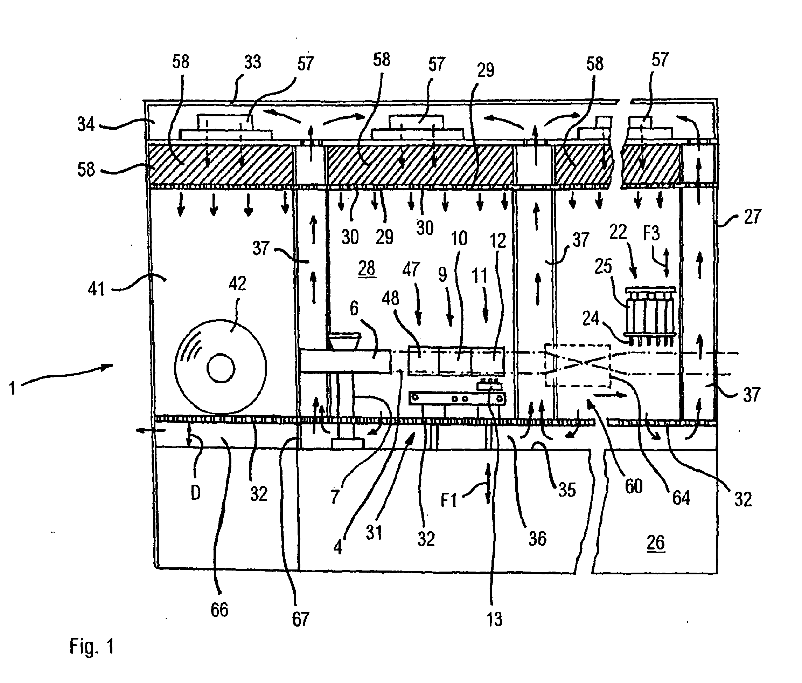

Figures 1 to 3 show an apparatus 1 for forming containers 2 comprising a first sheet 3 of thermoformable material and a second sheet 4 of thermoformable material that are respectively unwound from a first reel 5 and from a second reel 6 to be indexed, in the direction indicated by the arrow F, through a plurality of workstations with which the apparatus 1 is provided.

The first reel 5 and the second reel 6 are rotationally supported on support means 7.

The apparatus 1 further comprises return means 8 arranged for directing the first sheet 3 and the second sheet 4 in such a way that they face each other during the advancement along the direction F.

Alternatively, a single reel from which a sheet of thermoformable material is unwound can be provided, the sheet material being subsequently folded along its own longitudinal axis in such a way as to define a pair of strips facing each other that are advanced in the direction indicated by the arrow F.

The workstations comprise a preheating station 47 provided with preheating mould means 48 arranged for heating the first sheet 3 and the second sheet 4 to approximately softening temperature in such a way as to prepare the first sheet 3 and the second sheet 4 for the subsequent operations provided for by the processing cycle.

The workstations further comprise a welding station 9 provided with welding mould means 10 arranged for welding together the first sheet 3 and the second sheet 4 along a perimetrical edge of containers 2 to be formed.

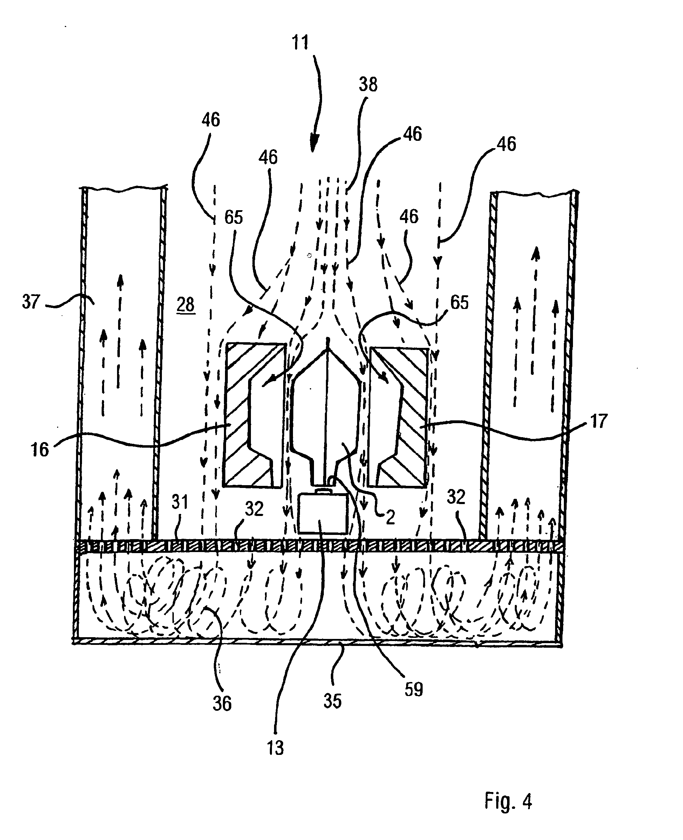

In this way, in the welding station 9 are obtained preforms of containers delimited by welding that extends along the entire perimetrical edge of the preforms except for a zone that defines an opening 59 (Figure 4) of the preforms.

The workstations further comprise a thermoforming station 11 provided with forming mould means 12 heated and provided with cavities 65 (Figure 4) arranged for receiving the afore said preforms.

The thermoforming station 11 further comprises injecting means 13 arranged for injecting a forming fluid inside the preforms through the openings 59.

The action of the forming fluid makes the first sheet 3 and the second sheet 4, which have been made deformable through the effect of the heat, to adhere to the walls of the cavities 65 thus taking on the shape thereof so as to form the containers 2.

The apparatus 1 further comprises actuating means, that is not shown, that is suitable for translating the injecting means to and away from the forming mould means 12 in the direction of the arrow F1.

The preheating mould means 48 comprises a first half mould 49 and a second half mould 50 suitable for pressing against one another to interact with the first sheet 3 and the second sheet 4.

Similarly, the welding mould means 10 comprises a first welding half mould 14 cooperating with a second welding half mould 15, and the forming mould means 12 comprises a first forming half mould 16 cooperating with a second forming half mould 17.

The first preheating half mould 49, the first welding half mould 14 and the first forming half mould 16 are integral with a first plate 18, whilst the second preheating half mould 50, the second welding half mould 15 and the second forming half mould 17 are integral with a second plate 19.

The first plate 18 and the second plate 19 are respectively actuated by first actuating means 20 and by second actuating means 21 in such a way as to be movable to and away from each other in the direction indicated by the arrows F2.

The above said workstations further comprise a filling station 22 provided with a metering device 25 that is movable in the direction of the arrow F3.

The metering device 25 comprises a plurality of nozzles 24 arranged for picking up a product, for example a food product in fluid state, from a tank that is not shown and introducing it inside the containers 2 through the openings 59 with which they are provided.

If in the first sheet 3 and in the second sheet 4 containers are formed that are arranged on several vertical lines, the stations may comprise, upstream of the filling station, a cutting station in which each line of containers is separated from the remaining lines of containers, and an alignment station, in which the lines of containers are arranged next to one another to enable the simultaneous introduction of the product inside the containers belonging to adjacent lines.

The apparatus 1 comprises a base 26 from which a plurality of side walls 27 lead away that are arranged on substantially vertical planes laterally delimiting a chamber 28 arranged for containing the afore mentioned workstations.

The chamber 28 is delimited on the upper part by a further wall 29 provided with a plurality of holes 30.

As shown in Figure 4, the chamber 28 is delimited in the lower part by a still further wall 31 provided with a plurality of further holes 32.

The further wall 29 and the still further wall 31 may comprise a perforated metal sheet, or a wire netting having meshes of preset dimensions.

The apparatus 1 further comprises a panel 33 arranged above the further wall 29 and cooperating with the latter to define a seat 34 suitable for receiving fan means 57 arranged for generating an air flow.

The fan means 57 directs the flow that it generates through filter means 58 suitable for purifying the air.

The filter means 58 comprises high-efficiency filters that enable a sterile air flow 38 to be obtained.

This sterile air is introduced inside the chamber 28 and is directed to the devices installed in the workstations - and to the first sheet 3, the second sheet 4 and the containers 2 obtained from them - to remove the particles of dust and the microorganisms from them.

The still further wall 31 is arranged at a preset distance D from a top face 35 of the base 26 and cooperates with the top face 35 to define a gap 36 suitable for receiving the sterile air that flows through the further holes 32.

The side walls 27, the further wall 29 - and the panel 33 associated therewith - the still further wall 31 and the base 26 isolate the chamber 28 from the external environment.

The apparatus 1 further comprises a plurality of conduits 37 arranged substantially vertically that connect the seat 34 and the gap 36.

As shown in figure 4, inside the chamber 28 the flow 38 of sterile air is a laminar flow.

The streamlines that form the flow 38 move along well-defined and constant trajectories 46 that lick the containers 2, the first forming half mould 16, the second forming half mould 17, and any other devices that may be present inside the thermoforming station 11.

This is due to the presence of the still further wall 31, which, by being penetrated by the flow 38, acts as a streamlines diffusing and rectifying element.

In this way, the formation of vortices is prevented that could remove particles of powder or microorganisms from remote zones of the apparatus and introduce them inside the workstations.

The fan means 57 keeps the air inside the chamber 28 at a slight overpressure in respect to the gap 36 in such a way that the flow 38 crosses the workstations from top to bottom.

The injecting means 13 is positioned below the forming mould means 10 in such a way as not to disturb the laminar flow 38.

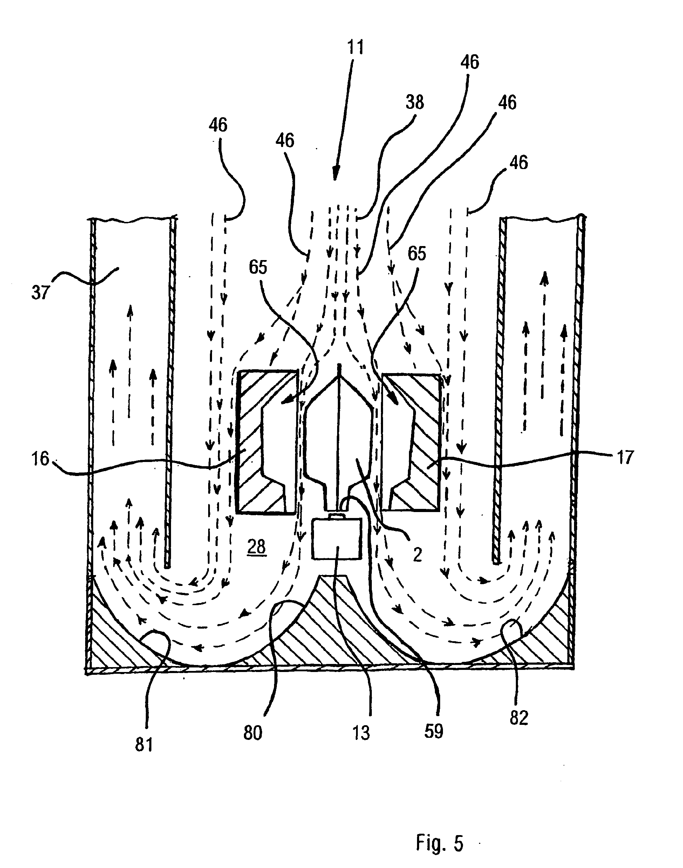

Figure 5 shows one embodiment of the apparatus 1 in which the chamber 28 is defined in its lower part by a curved wall 80 shaped in such a way as to deviate the trajectories of the streamlines that form the flow 38 without disturbing their laminar flow.

The curved wall 80 comprises a first curved portion 81 and a second curved portion 82 joined by a straight portion 83 arranged below the injecting means 13.

The curved wall 80 substantially reverses the advancing direction of the flow 38 by guiding the streamlines that form it along well-defined and constant trajectories.

The first curved portion 81 and the second curved portion 82 direct the flow 38 to the conduits 37 that convey the flow to the seat 34 and to the filter means 58.

The curved wall 80, being easily accessible, can be effectively sanitised with extreme simplicity.

This enables a high-performance apparatus to be obtained, inasmuch as cleaning of the curved wall 80 does not involve downtime.

As the containers 2, after being formed, have their opening 59 pointing downwards, a rotation station 60 of the containers 2 is provided between the thermoforming station 11 and the filling station 22.

Upstream of the filling station 22 a washing station 64 is provided, in which an inert gas is introduced inside the containers 2 to wash them before introducing therein a product to be packaged.

In the rotation station 60 the containers 2 are rotated by 180° degrees in such a way that, at the end of the rotation the opening 59 of each of them is turned to the nozzles 24 of the metering device 25.

The overpressure generated inside the chamber 28 by the fan means 57 furthermore prevents the air received inside the gap 36 from pouring out from the further holes 32 to return inside the chamber 28.

The air contained inside the gap 36, having come into contact with the devices present inside the workstations, may be contaminated.

This air is therefore directed by the conduits 37 to the filter means 58, which purifies it before it is re-introduced inside the chamber 28.

The apparatus 1 is provided with an opening 39, obtained in one of the side walls 27, through which the formed, filled and sealed containers 2 emerge from the chamber 28.

The overpressure inside the chamber 28 prevents contaminating agents from entering through the opening 39 and contaminating the workstations.

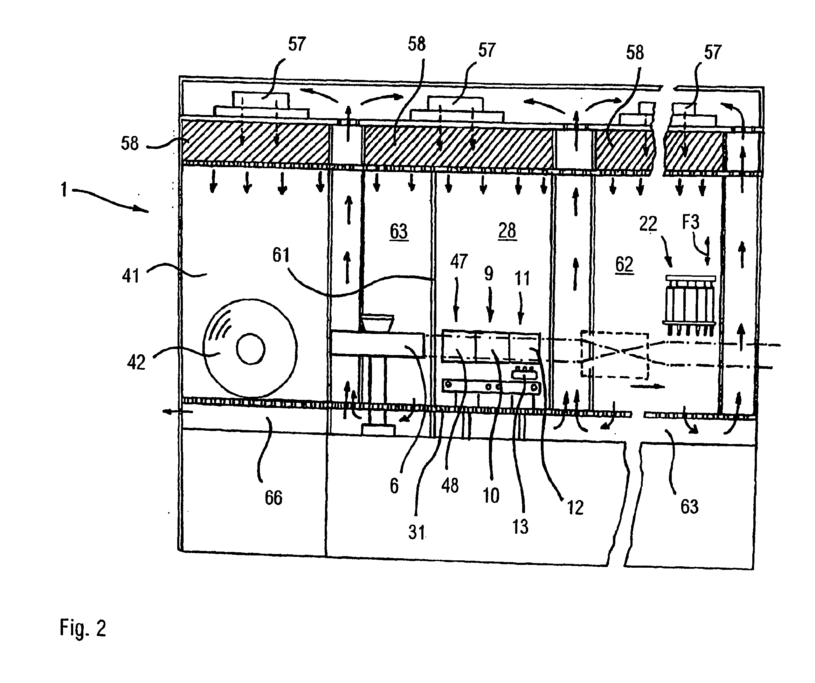

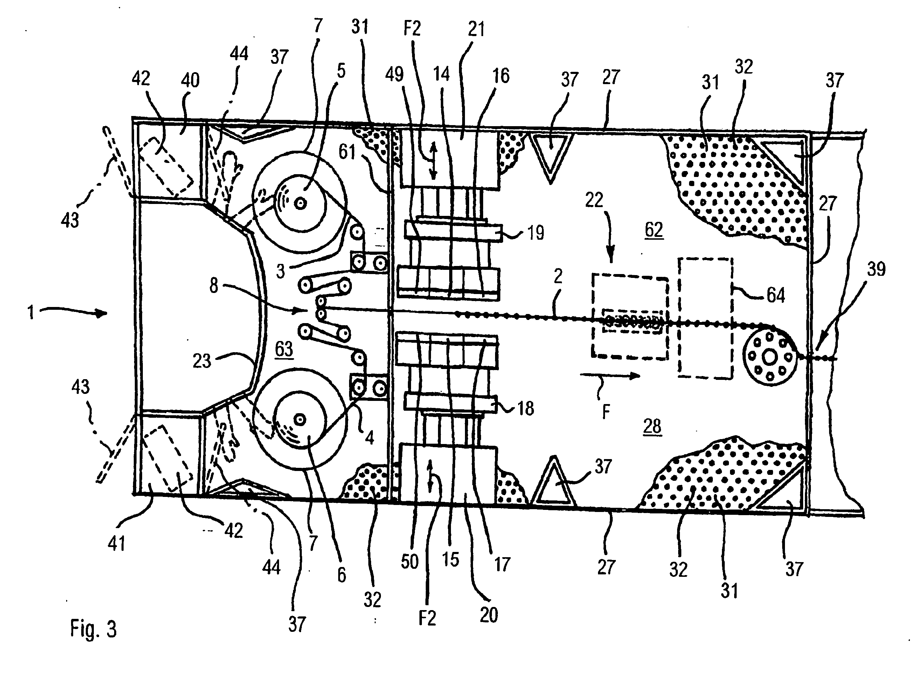

As Figures 2 and 3 show, the apparatus 1 may comprise a baffle 61 suitable for subdividing the chamber 28 into a first chamber 62 suitable for containing the preheating station 47, the welding station 9 and the thermoforming station 11, and the filling station 22 - in addition to any other workstations that will be disclosed below - and into a second chamber 63 suitable for receiving the first reel 5 and the second reel 6.

The presence of the baffle 61 prevents contaminating particles that may be present on the first reel 5 and/or on the second reel 6 from contaminating the preheating station 47, the welding station 9, the thermoforming station 12 and the filling station 22.

The baffle 61 is provided with slit means that is not shown and that is arranged for enabling the passage of the first sheet 3 and of the second sheet 4 from the first chamber 62 to the second chamber 63.

The apparatus 1 further comprises a further chamber 40 and a still further chamber 41 contiguous to the chamber 28 and arranged near zones of the chamber 28 into which the first reel 5 and the second reel 6 are positioned.

The further chamber 40 and the still further chamber 41 are each arranged for receiving a further reel 42 suitable for replacing the first reel 5, or the second reel 6, once the sheet material wound on the first reel 5, or on the second reel 6 is finished.

The further chamber 40 and the still further chamber 41 are each provided with a shutter 44 that separates them from the chamber 28 and with a further shutter 43 that isolates them from the external environment.

Both the shutter 44 and the further shutter 43 are movable between an open position, indicated by a dashed line in Figure 2, and a closed position indicated by a solid line in Figure 2.

To change a reel, it is possible to initially insert the further reel 42, wound in a protective envelope that maintains its sterile condition, inside the further chamber 40, or inside the still further chamber 41.

Subsequently, the envelope can be removed by sleeves 45 that enable an operator to interact with the further reel 42, remaining outside the further chamber 40, or the still further chamber 41, in such a way as to prevent contaminations.

Subsequently, by opening the shutter 44, the further chamber 40, or the still further chamber 41, is made to communicate with the chamber 28 and, by means of the sleeves 45, it is possible to remove the first reel 5, or the second reel 6, from the support means 7 and replace it with the further reel 42.

The apparatus 1 further comprises a further gap 66 delimited in its upper part by the still further wall 31 and separated from the gap 36 by a panel 76.

The seat 34 and the further gap 66 respectively extend above and below the further chamber 40 and the still further chamber 41, in such a way that also the latter are crossed by a sterile air flow with a laminar flow.

In particular, the further chamber 40 and the still further chamber 41 are delimited in their upper part by the further wall 29 and are delimited in their lower part by the still further wall 31.

The flow 38 of sterile air is thus able to remove from the further reel 42 any dust particles or microorganisms that have been able to penetrate inside the protective envelope, before the further reel 42 introduced inside the chamber 28.

In other words, as the further chamber 40 and the still further chamber 41 may be contaminated at the moment of opening of the further shutter 43, the passage of the flow 38 of sterile air restores their sterile condition before they are placed in communication with the chamber 28 for installing the further reel 42 on the support means 7.

The further reel 42, does not therefore constitute a potential source of contamination for the workstations of the apparatus 1, or for the containers produced in the apparatus 1, inasmuch as it has been beforehand immersed in the flow 38 of sterile air.

Reel changing can further be carried out with great rapidity.

The air that crossed the further chamber 40 and the still further chamber 41 - which make up the zones of the apparatus 1 that are most exposed to risks of contamination - is not conveyed to the seat 34 by the conduits 37, but is evacuated from the apparatus 1.

After being properly filtered, this air can be delivered to an environment inside which the apparatus 1 is installed, or can be discharged outside the building in which the environment is located.

Alternatively, the further chamber 40 and the still further chamber 41 may be delimited in their lower part by a further curved wall shaped in a similar manner to the curved wall 80 disclosed with reference to Figure 5.

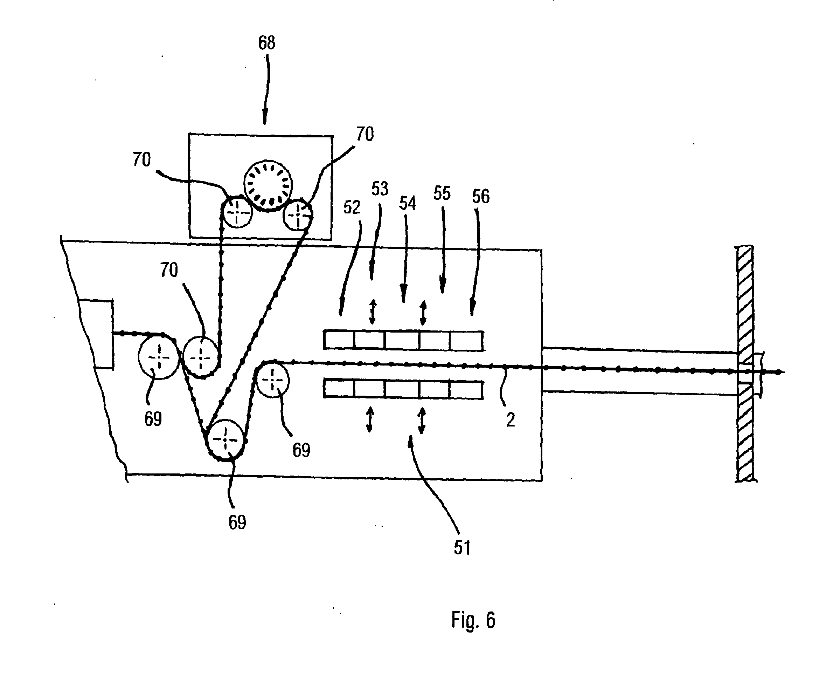

As shown in Figure 6, the workstations comprise a sealing station 51 in which are sealed the openings 59 with which the containers are provided.

In the sealing station 51 three preheating moulds 52, 53, 54 are provided that are suitable for progressively heating the first sheet 3 and the second sheet 4.

With the three preheating moulds 52, 53, 54, sealing moulds 55, are associated that weld together the first sheet 3 and the second sheet 4 to close the openings 59, and cooling moulds 56, which cool the zones of the first sheet 3 and of the second sheet 4 arranged near the openings 59.

The apparatus 1 further comprises an inserting station 68 in which dispenser are associated with the openings 59, the dispenser being provided with respective plugs that are fixed to the containers 2 in the sealing station 51 arranged downstream of the inserting station 68 that has been previously disclosed.

The first sheet 3 and the second sheet 4 are guided through the inserting station 68 and the sealing station 51 by first return means 69 and by second return means 70.

If the openings 59 have to be sealed without the dispensers being first associated therewith, the first sheet 3 and the second sheet 4 do not interact with the second return means 70, but are directly directed to the sealing station 51 by the first return means 69.

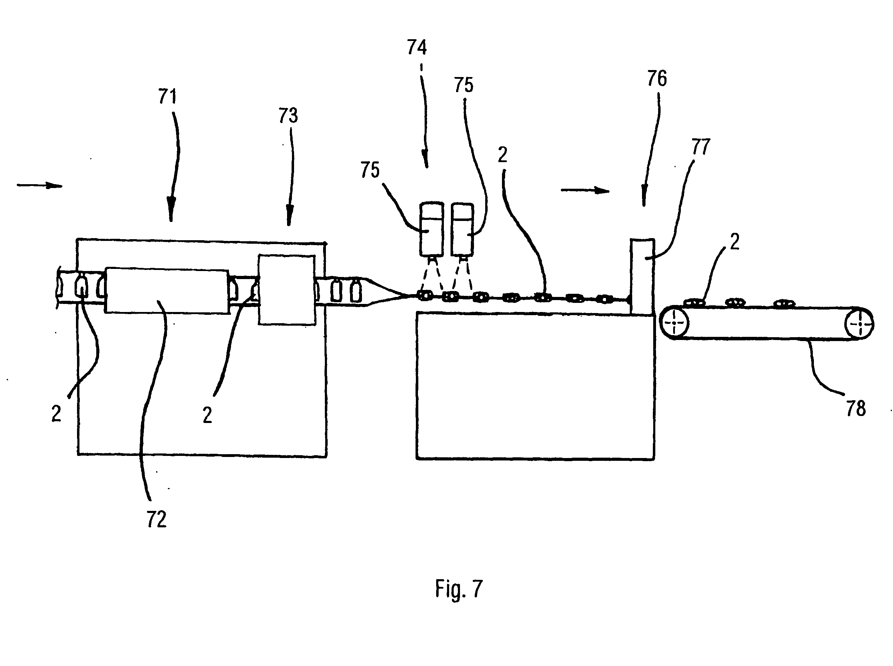

As shown in Figure 7, the apparatus 1 downstream of the sealing station 51 comprises a controlling station 71 at which the seal of the containers 2 is tested.

The controlling station 71 comprises a compartment 72 through which the containers 2 are advanced and inside which the vacuum is created by means of a suitable pump.

The controlling station 71 further comprises pressure-sensor means suitable for detecting a pressure increase inside the compartment 72, this pressure increase being due to the evaporation of a product packaged inside one of the containers 2 that partially leaks from the latter through an undesired laceration.

The pressure sensor means is connected to pickup means that rejects the container 2 that has been found to be defective.

The apparatus 1 further comprises a perforating station 73 in which in the first sheet 3 and in the second sheet 4, in regions interposed between adjacent containers 2, are obtained separation lines suitable for promoting the detachment of a container 2 from a group comprising a plurality of containers 2.

The apparatus 1 further comprises a further controlling station 74 in which are provided cameras 75 that inspect the formed, filled and sealed containers 2 in order to identify any defects such as an insufficient degree of filling and the like.

The cameras 75 further enable checking that the containers 2 do not contain insects or other impurities that have remained trapped between the films that make up the sheet material at the moment of manufacture of the sheet material.

The apparatus 1 further comprises a severing station 76 provided with a severing mould 77 that separates the containers 2 from undeformed portions of the first sheet 3 and of the second sheet 4 and delivers the containers 2 to a belt conveyor that evacuates the containers 2 from the apparatus 1. The containers 2 were preventively sealed before passing through the controlling station 71, the perforating station 73, the further controlling station 74 and the severing station 76.

As a result, the aforementioned stations can be located outside the chamber 28 crossed by the flow of sterile air.

Alternatively, the aforementioned stations may not be part of the apparatus 1 and be positioned in a zone separated from an isolated environment in which the apparatus 1 is installed.

In this case the costs connected with obtaining controlled hygienic conditions inside the isolated environment can be reduced.

## Claims

1. Apparatus for thermoforming containers (2) by injection of a forming fluid, comprising a plurality of workstations (9, 11, 22, 47) through which a sheet material (3, 4) that is to be thermoformed is advanced, flow generating means for generating a flow (38) of sterile fluid arranged for sterilizing said workstations (9, 11, 22, 47), **characterised in that** it further comprises diffusing means (31; 80) arranged for guiding the streamlines of said flow (38) along preset trajectories (46).

2. Apparatus according to claim 1, wherein said diffusing means (31) is shaped in such a way as to maintain said flow (38) as a substantially laminar flow during its passage through said workstations (9, 11, 22, 47).

3. Apparatus according to claim 1, or 2, and further comprising chamber means (28) isolated from an external environment and arranged for receiving said workstations (9, 11, 22, 47).

4. Apparatus according to claim 3, wherein said diffusing means (31; 80) is associated with a zone of said chamber means (28) opposite a further zone of said chamber means (28) in correspondence of which said generating means introduces said flow (38) inside said chamber means (28).

5. Apparatus according to any one of claims 1 to 4, wherein said diffusing means comprises curved wall means (80) arranged for diverting said flow (38).

6. Apparatus according to claim 5, wherein said curved wall means (80) comprises a first curved portion (81) and a second curved portion (82).

7. Apparatus according to claim 6, and furthermore comprising a joining element (83) arranged for joining said first curved portion (81) and said second curved portion (82).

8. Apparatus according to claim 7, wherein said joining element (83) is arranged in correspondence of operating means (10, 12, 13, 25, 48) of said apparatus provided in said workstations (9, 11, 22, 47).

9. Apparatus according to any one of claims 5 to 8, wherein said curved wall means (80) directs said flow (38) to conduit means (37) arranged for transferring said fluid towards said generating means.

10. Apparatus according to any one of claims 1 to 4, wherein said diffusing means comprises wall means (31) provided with hole means (32) suitable for enabling the passage of said flow (38).

11. Apparatus according to claim 10, wherein said hole means comprises a plurality of holes (32) obtained in said wall means (31).

12. Apparatus according to claim 10, or 11, when claim 10 is appended to claim 3, or to claim 4, wherein said wall means (31) delimits gap means (36) suitable for receiving said flow (38) coming from said chamber means (28).

13. Apparatus according to claim 12, and further comprising conduit means (37) arranged for transferring said fluid from said gap means (36) towards said generating means.

14. Apparatus according to claim 3, or 4, or according to any one of claims 5 to 13 when appended to claim 3, or 4, and further comprising baffle means (61) suitable for defining in said chamber means (28) first chamber means (62) suitable for receiving said workstations (9, 11, 22, 47) and second chamber means (63) suitable for receiving reel means (5, 6, 42) from which said sheet material (3, 4) is unwound to be advanced through said workstations (9, 11, 22, 47).

15. Apparatus according to claim 14, wherein said baffle means (61) comprises slit means suitable for enabling the passage of said sheet material (3, 4) from said first chamber means (62) to said second chamber means (63).

16. Apparatus according to claim 14, or 15, and further comprising further chamber means (40, 41) isolated from the external environment and suitable for receiving said reel means (42) before said reel means (42) is introduced in said chamber means (28).

17. Apparatus according to claim 16 when claim 14 is appended to any one of claims 10 to 13, wherein said wall means (31) delimits said further chamber means (40, 41), in such a way that said flow (38) of sterile air crosses said further chamber means (40, 41).

18. Apparatus according to claim 17, wherein said wall means (31) defines further gap means (66) suitable for receiving said flow (38) coming from said further chamber means (40, 41).

19. Apparatus according to claim 18, wherein said further gap means (66) leads outside said apparatus (1).

20. Apparatus according to claim 18, or 19, when claim 14 is appended to claim 12, or 13, wherein said further gap means (66) is separated from said gap means (36) by panel means (67).

21. Apparatus according to any one of claims 16 to 20, wherein said further chamber means (40, 41) comprises shutter means (43) movable between an open position and a closed position and suitable for making said further chamber means (40, 41) to communicate with an external environment.

22. Apparatus according to any one of claims 16 to 21, wherein said further chamber means (40, 41) comprises further shutter means (44) movable between a further open and a further closed position and suitable for making said further chamber means (40, 41) to communicate with said chamber means (28).

23. Apparatus according to any one of claims 16 to 22, and further comprising sleeve means (45) projecting inside said further chamber means (40, 41) and shaped in such a way as to enable an operator to transfer said reel means (42) from said further chamber means (40, 41) to said chamber means (28) remaining outside said further chamber means (40, 41) and said chamber means (28).

24. Apparatus according to any preceding claim, and further comprising filtering means (58) arranged for filtering said fluid before said fluid is directed to said workstations (9, 11, 22, 47).

## Patentansprüche

1. Vorrichtung zum Thermoformen von Behältern (2) durch Einspritzen eines Formfluids mit einer Vielzahl von Arbeitsstationen (9, 11, 22, 47), durch die ein Schichtmaterial (3, 4), das thermozuformen ist, vorbewegt wird, strömungserzeugenden Mitteln zum Erzeugen einer Strömung (38) eines sterilen Fluids, die zum Sterilisieren der Arbeitsstationen (9, 11, 22, 47) angeordnet ist, **dadurch gekennzeichnet, dass** des Weiteren eine Verbreitungseinrichtung (31; 80) vorgesehen ist, die zum Führen der Stromlinien der Strömung (38) entlang voreingestellter Trajektorien (46) angeordnet ist.

2. Vorrichtung nach Anspruch 1, wobei die Verbreitungseinrichtung (31) auf eine solche Weise gestaltet ist, dass die Strömung (38) als eine im Wesentlichen laminare Strömung während ihres Durchgangs durch die Arbeitsstationen (9, 11, 22, 47) beibehalten wird.

3. Vorrichtung nach Anspruch 1 oder 2, die des Weiteren eine Kammereinrichtung (28) aufweist, die von einer äußeren Umgebung isoliert ist und die zum Aufnehmen der Arbeitsstationen (9, 11, 22, 47) angeordnet ist.

4. Vorrichtung nach Anspruch 3, wobei die Verbreitungseinrichtung (31; 80) mit einer Zone der Kammereinrichtung (28) verbunden ist, die einer weiteren Zone der Kammereinrichtung (28) gegenüberliegt, mit denen die Erzeugungsmittel in Übereinstimmung die Strömung (38) in die Kammermittel (28) einführen.

5. Vorrichtung nach einem der Ansprüche 1 bis 4, wobei die Verbreitungseinrichtung eine gekrümmte Wandeinrichtung (80) aufweist, die zum Ablenken der Strömung (38) angeordnet ist.

6. Vorrichtung nach Anspruch 5, wobei die gekrümmte Wandeinrichtung (80) einen ersten gekrümmten Teil (81) und einen zweiten gekrümmten Teil (82) aufweist.

7. Vorrichtung nach Anspruch 6, die des Weiteren ein Verbindungselement (83) aufweist, das zum Verbinden des ersten gekrümmten Teils (81) und des zweiten gekrümmten Teils (82) angeordnet ist.

8. Vorrichtung nach Anspruch 7, wobei das Verbindungselement (83) in Übereinstimmung mit Betätigungsmitteln (10, 12, 13, 25, 48) der Vorrichtung angeordnet ist, die in den Arbeitsstationen (9, 11, 22, 47) vorgesehen sind.

9. Vorrichtung nach einem der Ansprüche 5 bis 8, wobei die gekrümmte Wandeinrichtung (80) die Strömung (38) zu einer Kanaleinrichtung Leitungsmitteln (37) lenkt, die zum Transferieren des Fluids in Richtung der Erzeugungsmittel angeordnet ist.

10. Vorrichtung nach einem der Ansprüche 1 bis 4, wobei die Verbreitungsmittel eine Wandeinrichtung (31) aufweisen, die mit einer Locheinrichtung (32) versehen ist, die zum Ermöglichen des Durchgangs der Strömung (38) geeignet ist.

11. Vorrichtung nach Anspruch 10, wobei die Locheinrichtung eine Vielzahl von Löchern (32) aufweist, die in der Wandeinrichtung (31) erhalten werden.

12. Vorrichtung nach Anspruch 10, oder 11, wenn Anspruch 10 von Anspruch 3 oder 4 abhängt, wobei die Wandeinrichtung (31) durch eine Spalteinrichtung (36) begrenzt ist, die zum Aufnehmen der Strömung (38) geeignet ist, die von der Kammereinrichtung (28) kommt.

13. Vorrichtung nach Anspruch 12, die des Weiteren eine Kanaleinrichtung (37) aufweist, die zum Transferieren des Fluids von der Spalteinrichtung (36) in Richtung der Erzeugungsmittel angeordnet ist.

14. Vorrichtung nach Anspruch 3 oder 4, oder gemäß einem der Ansprüche 5 bis 13, wenn sie von Anspruch 3 oder 4 abhängen, die des Weiteren eine Umlenkeinrichtung (61), die zum Definieren einer ersten Kammereinrichtung (62), die zum Aufnehmen der Arbeitsstationen (9, 11, 22, 47) geeignet ist, in der Kammereinrichtung (28) geeignet ist, und eine zweite Kammereinrichtung (63) aufweist, die zum Aufnehmen einer Rolleneinrichtung (5, 6, 42) geeignet ist, von der das Schichtmaterial (3, 4) abgewickelt wird, um durch die Arbeitsstationen (9, 11, 22, 47) vorbewegt zu werden.

15. Vorrichtung nach Anspruch 14, wobei die Umlenkeinrichtung (61) eine Schlitzeinrichtung aufweist, die zum Ermöglichen des Durchgangs des Schichtmaterials (3, 4) aus der ersten Kammereinrichtung (62) zu der zweiten Kammereinrichtung (63) geeignet ist.

16. Vorrichtung nach Anspruch 14 oder 15, die des Weiteren eine weitere Kammereinrichtung (40, 41) aufweist, die von der äußeren Umgebung isoliert ist und die zum Aufnehmen der Rolleneinrichtung (42) geeignet ist, bevor die Rolleneinrichtung (42) in die Kammereinrichtung (28) eingeführt wird.

17. Vorrichtung nach Anspruch 16, wenn Anspruch 14 von einem der Ansprüche 10 bis 13 abhängt, wobei die Wandeinrichtung (31) die weitere Kammereinrichtung (40, 41) auf eine solche Weise begrenzt, dass die Strömung (38) aus steriler Luft die weitere Kammereinrichtung (40, 41) durchquert.

18. Vorrichtung nach Anspruch 17, wobei die Wandeinrichtung (31) eine weitere Spalteinrichtung (66) definiert, die zum Aufnehmen der Strömung (38) geeignet ist, die von der weiteren Kammereinrichtung (40, 41) kommt.

19. Vorrichtung nach Anspruch 18, wobei die weitere Spalteinrichtung (66) aus der Vorrichtung (1) nach außen führt.

20. Vorrichtung nach Anspruch 18 oder 19, wenn Anspruch 14 von Anspruch 12 oder 13 abhängt, wobei die weitere Spalteinrichtung (66) von der Spalteinrichtung (36) mittels einer Platteneinrichtung (67) getrennt ist.

21. Vorrichtung nach einem der Ansprüche 16 bis 20, wobei die weitere Kammereinrichtung (40, 41) eine Verschlusseinrichtung (43) aufweist, die zwischen einer geöffneten Stellung und einer geschlossenen Stellung beweglich ist und die geeignet ist, die weitere Kammereinrichtung (40, 41) dazu zu veranlassen, mit einer äußeren Umgebung zu kommunizieren.

22. Vorrichtung nach einem der Ansprüche 16 bis 21, wobei die weitere Kammereinrichtung (40, 41) des Weiteren eine Verschlusseinrichtung (44) aufweist, die zwischen einer weiteren geöffneten und einer weiteren geschlossenen Stellung beweglich ist und die geeignet ist, die weitere Kammereinrichtung (40, 41) dazu zu veranlassen, mit der Kammereinrichtung (28) zu kommunizieren.

23. Vorrichtung nach einem der Ansprüche 16 bis 22, die des Weiteren eine Buchseneinrichtung (45) aufweist, die in die weitere Kammereinrichtung (40, 41) vorsteht und auf eine solche Weise ausgebildet ist, dass eine Bedienperson die Rolleneinrichtung (42) von der weiteren Kammereinrichtung (40, 41) zu der Kammereinrichtung (28) transferieren kann, die außerhalb der weiteren Kammereinrichtung (40, 41) und der Kammereinrichtung (28) bleibt.

24. Vorrichtung nach einem der vorhergehenden Ansprüche, die des Weiteren eine Filtereinrichtung (58) aufweist, die zum Filtern des Fluids angeordnet ist, bevor das Fluid zu den Arbeitsstationen (9, 11, 22, 47) gelenkt wird.

## Revendications

1. Dispositif de thermoformage de récipients (2) par injection d'un fluide de formage, comprenant une pluralité de postes de travail (9, 11, 22, 47) à travers lesquels progresse un matériau en feuille (3, 4) qui doit être thermoformé, des moyens de génération d'un écoulement pour produire un écoulement (38) de fluide stérile prévu pour stériliser lesdits postes de travail (9, 11, 22, 47), ***caractérisé en ce qu'**il* comprend en plus des moyens de diffusion (31 ; 80) agencés pour guider les lignes de courant dudit écoulement (38) le long de trajectoires prédéterminées (46).

2. Dispositif selon la revendication 1, dans lequel lesdits moyens de diffusion (31) sont configurés de façon à maintenir ledit écoulement (38) sous forme d'écoulement sensiblement laminaire pendant son passage à travers lesdits postes de travail (9, 11, 22, 47).

3. Dispositif selon la revendication 1 ou 2, et comprenant additionnellement des moyens de chambre (28) isolés d'un environnement extérieur et prévus pour recevoir lesdits postes de travail (9, 11, 22, 47).

4. Dispositif selon la revendication 3, dans lequel lesdits moyens de diffusion (31 ; 80) sont associés à une zone desdits moyens de chambre (28) opposée à une autre zone desdits moyens de chambre (28) en correspondance de laquelle lesdits moyens de génération introduisent ledit écoulement (38) à l'intérieur desdits moyens de chambre (28).

5. Dispositif selon l'une quelconque des revendications 1 à 4, dans lequel lesdits moyens de diffusion comprennent des moyens de paroi incurvée (80) prévus pour dévier ledit écoulement (38).

6. Dispositif selon la revendication 5, dans lequel lesdits moyens de paroi incurvée (80) comprennent une première portion incurvée (81) et une deuxième portion incurvée (82).

7. Dispositif selon la revendication 6, et comprenant de plus un élément de jonction (83) prévu pour réunir ladite première portion incurvée (81) et ladite deuxième portion incurvée (82).

8. Dispositif selon la revendication 7, dans lequel ledit élément de jonction (83) est agencé en correspondance de moyens de commande (10, 12, 13, 25, 48) dudit dispositif installés dans lesdits postes de travail (9, 11, 22, 47).

9. Dispositif selon l'une quelconque des revendications 5 à 8, dans lequel lesdits moyens de paroi incurvée (80) dirigent ledit écoulement (38) vers des moyens de conduit (37) agencés pour transférer ledit fluide vers lesdits moyens de génération.

10. Dispositif selon l'une quelconque des revendications 1 à 4, dans lequel lesdits moyens de diffusion comprennent des moyens de paroi (31) munis de moyens d'orifice (32) aptes à permettre le passage dudit écoulement (38).

11. Dispositif selon la revendication 10, dans lequel lesdits moyens d'orifice comprennent une pluralité d'orifices (32) ménagés dans lesdits moyens de paroi (31).

12. Dispositif selon la revendication 10 ou 11, lorsque la revendication 10 est dépendante de la revendication 3 ou de la revendication 4, dans lequel lesdits moyens de paroi (31) délimitent des moyens d'intervalle (36) aptes à recevoir ledit écoulement (38) venant desdits moyens de chambre (28).

13. Dispositif selon la revendication 12, et comprenant de plus des moyens de conduit (37) agencés pour transférer ledit fluide desdits moyens d'intervalle (36) vers lesdits moyens de génération.

14. Dispositif selon la revendication 3 ou 4, ou selon l'une quelconque des revendications 5 à 13 lorsqu'elles sont dépendantes de la revendication 3 ou 4, et comprenant de plus des moyens de déflecteur (61) aptes à définir dans lesdits moyens de chambre (28) des premiers moyens de chambre (62) aptes à recevoir lesdits postes de travail (9, 11, 22, 47) et des deuxièmes moyens de chambre (63) aptes à recevoir des moyens de bobine (5, 6, 42) d'où est déroulé le matériau en feuille (3, 4) à faire progresser dans lesdits postes de travail (9, 11, 22, 47).

15. Dispositif selon la revendication 14, dans lequel lesdits moyens de déflecteur (61) comprennent des moyens de fentes aptes à permettre le passage dudit matériau en feuille (3, 4) desdits premiers moyens de chambre (62) vers lesdits deuxièmes moyens de chambre (63).

16. Dispositif selon la revendication 14 ou 15, et comprenant de plus des moyens de chambre supplémentaires (40, 41) isolés de l'environnement extérieur et aptes à recevoir lesdits moyens de bobine (42) avant que lesdits moyens de bobine (42) ne soient introduits dans lesdits moyens de chambre (28).

17. Dispositif selon la revendication 16 lorsque la revendication 14 est dépendante de l'une quelconque des revendications 10 à 13, dans lequel lesdits moyens de paroi (31) délimitent lesdits moyens de chambre supplémentaires (40, 41) d'une manière telle que ledit écoulement (38) d'air stérile traverse lesdits moyens de chambre supplémentaires (40, 41).

18. Dispositif selon la revendication 17, dans lequel lesdits moyens de paroi (31) définissent des moyens d'intervalle supplémentaires (66) aptes à recevoir ledit écoulement (38) venant desdits moyens de chambre supplémentaires (40, 41).

19. Dispositif selon la revendication 18, dans lequel lesdits moyens d'intervalle supplémentaires (66) conduisent à l'extérieur dudit dispositif (1).

20. Dispositif selon la revendication 18 ou 19, lorsque la revendication 14 est dépendante de la revendication 12 ou 13, dans lequel lesdits moyens d'intervalle supplémentaires (66) sont séparés desdits moyens d'intervalle (36) par des moyens de panneau (67).

21. Dispositif selon l'une quelconque des revendications 16 à 20, dans lequel lesdits moyens de chambre supplémentaires (40, 41) comprennent des moyens de volet (43) mobiles entre une position ouverte et une position fermée et aptes à faire communiquer lesdits moyens de chambre supplémentaires (40, 41) avec un environnement extérieur.

22. Dispositif selon l'une quelconque des revendications 16 à 21, dans lequel lesdits moyens de chambre supplémentaires (40, 41) comprennent des moyens de volet supplémentaires (44) mobiles entre une autre position ouverte et une autre position fermée et aptes à faire communiquer lesdits moyens de chambre supplémentaires (40, 41) avec lesdits moyens de chambre (28).

23. Dispositif selon l'une quelconque des revendications 16 à 22, et comprenant en plus des moyens de manchon (45) faisant saillie à l'intérieur desdits moyens de chambre supplémentaires (40, 41) et conformés de manière propre à permettre à un opérateur de transférer lesdits moyens de bobine (42) desdits moyens de chambre supplémentaires (40, 41) auxdits moyens de chambre (28) tout en restant à l'extérieur desdits moyens de chambre supplémentaires (40, 41) et desdits moyens de chambre (28).

24. Dispositif selon l'une quelconque des revendications précédentes, et comprenant de plus des moyens de filtration (58) prévus pour filtrer ledit fluide avant que ledit fluide ne soit dirigé vers lesdits postes de travail (9, 11, 22, 47).
